# EUROPEAN PATENT APPLICATION

(11) **EP 2 031 920 A1**
(43) Date of publication of application: **04.03.2009**
(21) Application number: 07012856.6
(22) Date of filing: 29.06.2007
(51) Int. Cl.: H04W 36/08

(54) **Method for handover data acqusition in a cellular communications network and communications network**

(71) Applicant: Nokia Siemens Networks Oy, 02610 Espoo (FI)
(72) Inventor: Breuer, Volker, Dr., 16727 Bötzow (DE); Huber, Alois, 1030 Wien (AT); Pollakowski,Olaf, Dr., 10629 Berlin (DE); Ulrich, Thomas, 67098 Bad Dürkheim (DE)
(74) Representative: Bruglachner, Thomas E.

(57) **Abstract**

Method for recording handover failures in a cellular communications network (CN) comprising a plurality of base stations (eNB1, eNB2, eNB3) and mobile user equipment (UE), said mobile user equipment (UE) being communicatively coupled to at least one of said base stations (eNB1, eNB2, eNB3), wherein identification data of base stations (eNB1, eNB2, eNB3) involved in a handover procedure from one base station (eNB1) to another base station (eNB2) is stored as handover failure data in said mobile user equipment (UE) for later analysis if a handover failure occurs.

## Description

The present invention relates to a method for recording handover failures in a cellular communications network and a communications network adapted to execute this method.

A cellular communications network, for example a radio network, is made up by a plurality of radio cells each served by a fixed transmitter which is also known as base station. The base stations service different areas (cells) which adds up to the coverage of the entire communications network. Handover occurs when an ongoing call or data session is transferred from one base station to another when the user equipment, for instance a mobile telephone, is moving from one cell area to another. The handover procedure enables cellular communications networks to provide mobility for the user without having to log off and log on to base stations manually, when moving about the coverage area of the network.

In particular, in cellular telecommunications networks, for example GSM or UMTS networks, there may be different reasons why a handover is to be conducted. For instance, the mobile phone moves away from a location covered by one cell or base station, respectively, and enters the area covered by another cell. Then, the call or data session is transferred to the second cell without interruption or termination of the actual call. A handover might also be necessary if the capacity for connecting new calls of a given cell is used up and the actual position of the phone is overlapped by more than one cell area.

However, handover failures may occur, for instance, when the wireless connection between the mobile phone and a source base station or target base station to be connected to in the handover is disturbed. It can happen then, that the call or data session terminates or is redirected or handed over, respectively, to a different base station than the predetermined target base station. Such a handover failure can be due to the geographical surroundings in the cell areas. For example reflections of the radio waves at flat surfaces or metal surfaces can give rise to such handover failures. Usually, such handover failures are not distributed equally over the entire area covered by the communications network, but only occur in particular constellations with respect to the position of the telephones, base stations and potentially disturbing objects.

It is desirable for the network operators to detect and analyse such reoccurring failures in order to enhance in the network performance for the customers. However, in particular in the next generation wireless telephone and data networks like the 3GPP-LTE (third Generation Partnership Project - Long Term Evolution) no central network controllers (RAN controllers) are provided for controlling handovers in geographically close cells, but rather the base stations themselves will prosecute and organize handovers from one to another. Hence, in those communications networks there is no central entity for analysing typical situations in which a handover fails.

It is therefore an object of the present invention to provide a method for obtaining and preferably gathering data on handover failures in such decentralized communications network.

This object is solved by a method for recording handover failures having the features of claim 1.

Accordingly, a method for recording handover failures in a cellular communications network comprising a plurality of base stations and mobile user equipment is provided wherein said mobile user equipment is communicatively coupled to at least one of said base stations. In this method identification data of base stations involved in a handover procedure from one base station to another base station is stored as handover failure data in said mobile user equipment for later analysis if a handover failure occurs.

In a typical handover situation the user equipment, for example a cellular phone, measures more or less continuously the strength of the radio signal of the actual base station to which the telephone is currently coupled. If according to predetermined threshold values for the radio signal strength it is convenient to switch to another cell or base station the user equipment sends a respective request. Then, a handover from one base station to another is initiated wherein the current call or data session is transferred to the second target base station. However, if it occurs that for unidentifiable reasons the user equipment or cell phone, respectively, does not couple to the target base station but to another third base station, which is also called fallback base station, and continous the call to this base station handover failure data is saved at the cell phone. It may also occur, that the data session terminates in the course of the actual handover procedure. Also this event leads to storage of the handover failure data.

In a preferred embodiment the method comprises:
- monitoring whether a handover procedure from the source base station to a predetermined target base station is initiated;
- verifying if the mobile user equipment is communicatively coupled to the predetermined target base station after completion of said handover procedure;
- if after completion of the handover procedure the mobile user equipment is communicatively coupled to a fallback base station different from the target base station, storing identification data of the source base station, the predetermined target base station and the fallback base station as handover failure data; and
- transferring the handover failure data to a storage means at a predetermined position in the communications network.

Through transferring the handover failure data at a certain position or node in the communications network data may be collected or aggregated at this location in the network for later analysis. For instance, service providers might analyse said handover failure data for identifying certain situations that more often lead to handover failures at certain base stations involved. Such correlations may indicate that for geographical reasons, for instance, because radio waves are reflected or attenuated by objects in the vicinity of the base stations involved, handover are less successful and the topology of the network can be improved.

In a first embodiment of the method handover failure data is transferred and stored at the resultant base station, to which the mobile user equipment is communicatively coupled as a result of the handover procedure. For example, this might be the fallback base station, or in cases where due to handover failures the actual connection to base stations is interrupted or terminated, the base station to which the user equipment is coupled later on.

In a second embodiment of the method the handover failure data is transferred from the fallback base station to the source base station or to the target base station through a horizontal communication interface between neighbouring base stations and the communications network. In particular in the 3GPP networks it is planned to provide an X2-interface between neighbouring base stations corresponding to adjacent geographical cells of the network.

In a third embodiment of the method at each base station in the communications network handover failure data is aggregated corresponding to handover failure events in which a respective base station is used as fallback base station. Hence, at any node or base station in the communications network handover failure data is available, where the respective base station is used as fallback base station, i. e. as a result of a handover procedure, the user equipment is coupled to the respective base station instead of the predetermined target base station.

In alternative embodiments at each base station in the communications network handover failure data aggregated corresponding to the handover failure events in which a base station is used as a source base station or is used as a target base station. In this cases, a handover failure data transfer from the user equipment to the target base station or source base station can be accomplished through the horizontal protocol enabling data exchange between neighbouring base stations.

It is also possible to aggregate handover failure data corresponding to a respective mobile user equipment at the respective mobile user equipment. At a later instance this aggregated handover failure data may be analysed. It is also possible to transfer the handover failure data to a mobile management entity host in the communications network. This would involve an interface between the base stations, also called evolved nodes in 3GPP-LTE networks the actual core network. This interface is called the S1 interface. Alternatively the handover failure data can be forwarded through an OAM-interface (operation and management) between the Enodes and element managers. Between those element managers a Per-to-Peer interface may be implemented.

Preferably, the handover failure data is aggregated over a predetermined time period. For example, it can be convenient to access the aggregated handover failure data any hour to analyse such data, for instance, for detecting correlations.

Preferably, the handover failure data further comprises a core network context referring to the handover. The core network context refers to the state machine of net elements involved in the handover. Hence, this detailed data on the circumstances of the handover failure may facilitate any analysis of the same. Alternatively, only an identifier relating to the core network context can be included into the handover failure data. From the respective identifier the actual context can be inferred from. For example, the identifier may reference a core network node providing the core network context. It is also preferable to add to the handover failure data identification data of the mobile user equipment.

In another embodiment of the method a handover procedure comprises:
- measuring the quality of communicative coupling between the mobile user equipment and the source base station;
- sending a handover request from the mobile user equipment to the source base station;
- forwarding the handover request from the source base station to a target base station; and
- decoupling of the mobile user equipment from the source base station and coupling to another base station as the target base station.

When measuring the quality and evaluating this quality with respect to certain threshold on this, for example as to the strength of a physical radio link between the mobile user equipment and the source base station, a handover procedure may be initiated.

Preferably, the handover failure data is stored in the form of a performance management counter. A counter just counts the events of handover failures in a convenient form, for example, the data can be stored in an XML data format as performance management counter. Analysing the handover failure data can be used for determining prevalent handover failure causes, as for example reoccurring handover failures due to reflections or attenuations of the actual radio signal.

The invention also relates to a communications network comprising a plurality of base stations and mobile user equipment. The base stations and mobile user equipment are then adapted to execute a method for recording handover failures as above.

The communications network is for example a UMTS network and the mobile user equipment might be a telephone. In one embodiment of the communications network the network does not comprise any control and device for controlling a subset of the plurality of base stations in the communications network for initiating or controlling a handover. In particular, in the next generation version of UMTS networks, radio access controllers serving an area covered by many cells in a geographical region are not provided. Rather, the handover procedure is exclusively executed by neighbouring base stations, for example through the before mentioned X2-interface.

The communications network can also be implemented where mobile user equipment context is exclusively accessible to the base station to which the mobile user equipment is actually communicatively coupled.

In a preferred embodiment of the communications network storing and/or aggregating handover failure data at the mobile user equipment and transferring the handover failure data is implemented as a software application of the mobile user equipment. This, for example can be a Java application running on operating system of a cell phone. In this case the mobility of the user can be employed for sampling handover data and collecting in particular handover failure data.

In addition each base station may comprise a storage means of storing handover failure data sets, corresponding to handover failure events in which the respective base station is a fallback base station.

Other preferred embodiments and advantageous developments of the invention are subject of the dependent claims and examplary embodiments as depicted in the following with reference to the appended drawings.

It shows
- Fig. 1:: a section of a wireless communications network;
- Fig. 2:: method steps involved in a method for recording handover failures;
- Fig. 3:: interfaces in a communications network;
- Fig. 4:: a diagram of layers in a communications network; and
- Fig. 5:: a handover procedure in a cellular communications network.

Elements in the figure having the same or like functions are signed the same reference symbols.

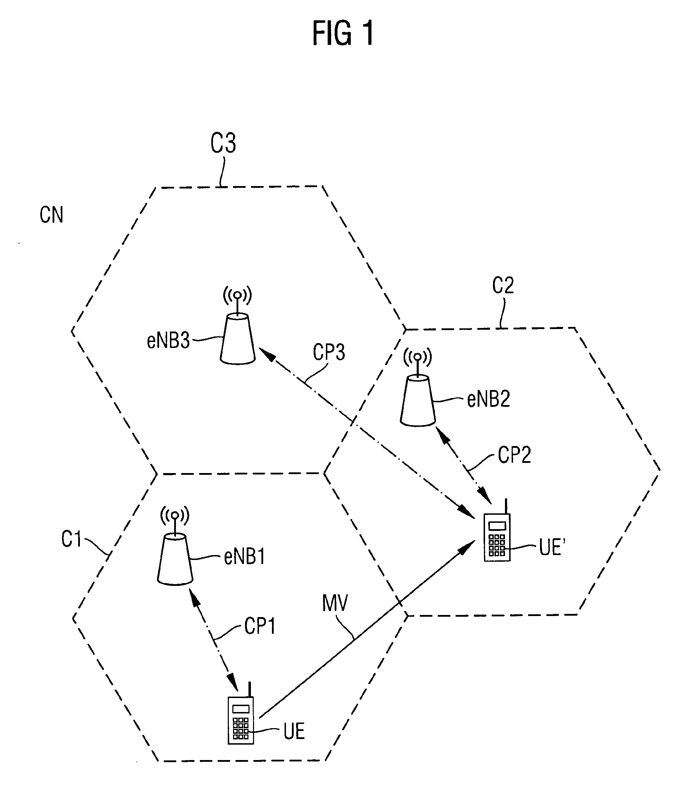

In fig. 1 a section of a communications network CN is shown wherein three cells C1, C2, C3 are illustrated. Each cell C1, C2, C3 has a base station eNB1, eNB2, eNB3, where they are also called evolved nodes B or eNodeB (eNB) in the 3GPP standard. A user equipment is illustrated as cell phone UE moving from cell C to cell C3 illustrated as an arrow MV. Usually, leaving the area of one cell the source cell C1 and entering the target cell C2 a handover procedure, i. e. the transfer of the coupling between the cell phone UE and the base station eNB1 as the source base station to a coupling between the cell phone UE' and the target base station eNB2.

However, it can happen due to particular circumstances, for example because of the geometry or geographical features of the environment, the handover procedure may not be accomplished. For example, it can happen, that the cell phone UE' in the target cell C2 cannot couple to the predetermined target base station eNB2 but rather couples to a fallback base station eNB3, which is usually in an adjacent cell C3. This is illustrated by the dashed-dotted arrow CP3. The situation where after the completion of a handover procedure a cell phone is not coupled to the target base station eNB2 but to a fallback base station eNB3 constitutes a handover failure.

In a 3GPP-LTE network handovers are exclusively negotiated between the eNB's. These enhanced base stations provide the LTE air interface and perform the radio resource management for the evolved access system. Apart from evolved nodeBs other network elements may be provisioned, for example an access gateway (AGW), which provides a termination of the LTE bearer. The access gateway functions as a mobility anchor point for the user plane. It implements logical functions including the mobility management entity (MME) for the control plane and the system architecture evolution packet data network gateway (SAE-PDNGW) for the user plane.

As a result, opposed to conventional 3G architecture the functions of a radio network controller are distributed between the access gateway and the enhanced base stations (eNBs). Therefore, a method for recording handover failures in a communications network CN is provided.

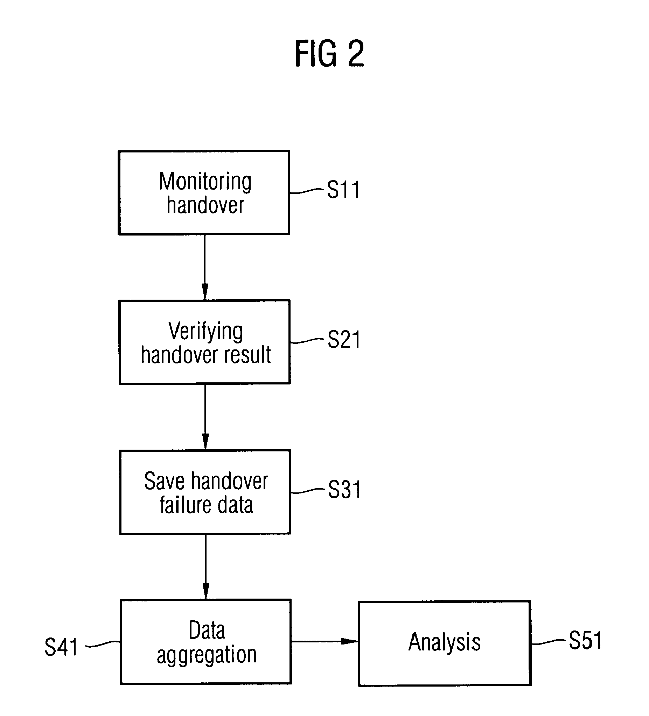

Fig. 2 shows an exemplary implementation of a method for recording handover failures. In a first step S11 it is monitored where the handover procedure from a source base station to a predetermined target base station is initiated.

Monitoring may be implemented at the user equipment or the cell phone UE. If such a handover procedure is initiated and to be carried out from a source base station or source eNodeB eNB2 to a target base station or target eNodeB eNB2 as a result of the handover procedure the mobile user equipment or cell phone UE is communicatively coupled to one base station. If the handover procedure functions swiftly the cell phone is coupled to the target eNodeB eNB2. However, if the cell phone is coupled CP3 to an eNodeB eNB3 different from the target one a failure occurred. This is verified in step S21.

If, after completion of the handover procedure the cell phone UE is communicatively coupled to such a fallback base station eNB3 identification data of the source base station eNB1, the predetermined target base station eNB2 and the fallback base station eNB3 is saved, for example at the cell phone UE as handover failure data in step S31.

This handover failure data is then transferred to the eNodeB eNB3 to which the cell phone UE' is coupled CP3. The handover failure data may also comprise an identification of the user equipment, the source eNodeB eNB1, the target eNodeB eNB2 and the fallback eNodeB eNB3. This handover failure data set characterises the situation or the circumstances in which the handover failure occurred. In addition other data may be added to the handover failure data, for example, data with respect to the handover threshold on the radio power of up and down links between the cell phone UE and the source eNodeB eNB1. The handover failure data may also comprise other information as to the user equipment context.

In step S41 such handover failure data is aggregated or collected at a predetermined location. This predetermined location might be for every handover failure the base station or eNodeB to which the user equipment UE is coupled as a result of the handover. This means, each eNodeB collects handover failure data in which it is involved as the fallback base station. However, it is also possible that such data aggregation is carried out at each eNodeB where the eNodeB is used as a source eNodeB or target eNodeB.

In the example shown in fig. 1 a handover failure data aggregation for example, can be carried out at the eNodeB eNB1, although as a result of the handover procedure the cell phone UE' is coupled CP3 to fallback eNodeB eNB3. The handover failure data set of the handover failure event is then transferred back to the source eNodeB eNB1 by a horizontal interface which is called X2 interface for example in the 3GPP-LTE networks. Alternatively, the handover failure data cells can be transferred to the target eNodeB eNB2 also via such horizontal interface X2.

For later analysis indicated in fig. 2 as the optional step S51 the accumulated or aggregated handover failure data can be transferred through another interface, the S1 interface, to the mobility management entity or a dedicated server for providing quality of service.

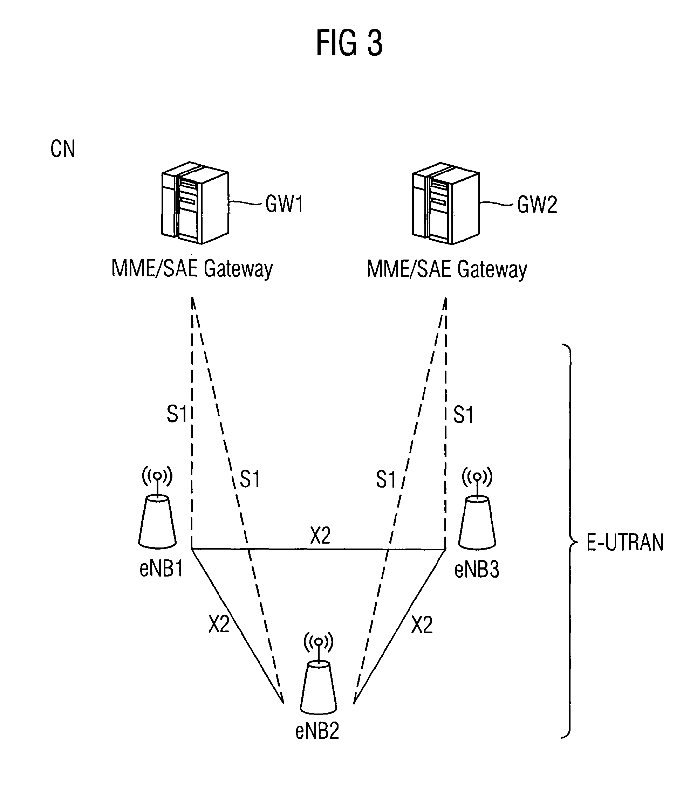

In fig. 3 the basic infrastructure of a communications network is shown. Three exemplary eNodeBs eNB1, eNB2 and eNB3 are shown, may exchange messages through the X2 interface. Further, two exemplary system architecture evolution gateways GW1, GW2 are shown. The communication between the eNodeBs eNB1, eNB2, eNB3 and the gateways GW1, GW2 is based on the S1 interface indicated by the dashed lines. The eNodeBs eNB1, eNB2, eNB3 each covering certain cell areas provide the universal terrestrial radio access network shown as E-UTRAN in fig. 3. The gateways GW1, GW2 host also the mobility management entity and provides the functions of the distribution of paging messages to the eNodeBs eNB1, eNB2, eNB3, security control, idle state mobility control, SAE bearer control, ciphering and integrity protection of non-access stratum (NAS) signaling.

The eNodeBs eNB1, eNB2, eNB3 host functions like radio resource management, for example radio bearer control, radio admission control, connection mobility control, allocation of resources to the user equipment in up-link and down-link and scheduling. Since most of the communication is internet protocol based the eNodeBs may also host IP header compression and encryption for the user data stream. The eNodeBs also perform the functions of selection of an MME (mobility management entity) if a user equipment attaches to an eNodeB. User plane data is then routed to the SAE gateway GW1, GW2. The eNodeBs also provide scheduling and transmission of paging messages originating from the MME and scheduling the transmission of broadcast information. Further, the E eNodeBs may provide for measurement and measurement reporting configuration for mobility and scheduling. The SAE gateway hosts functions as to the termination of user plane packets for paging reasons and switching of the user plane for support of user equipment mobility.

A transfer of handover failure data can easy be achieved in such a network architecture. As one example the aggregation of handover failure data at a source eNodeB can be accomplished in the form of a counter. An exemplary counter is shown below:

### SEQUENCE

{
- identification of the source cell
- considered time period
- total number of handover failures from this source cell in the considered time period
- SET OF SEQUENCE{identification of the target cell, number of handover failures to this target cell in the time period}
- SET OF SEQUENCE{identification of the fallback cell, number of cases where the UE reappeared in the cell}
}

Such a counter for example is one implementation for the aggregation of handover failure data sets. For further analysis such counters can be transferred within the network, for example over the S1 interface of a 3GPP network and to the MME/SAI gateway.

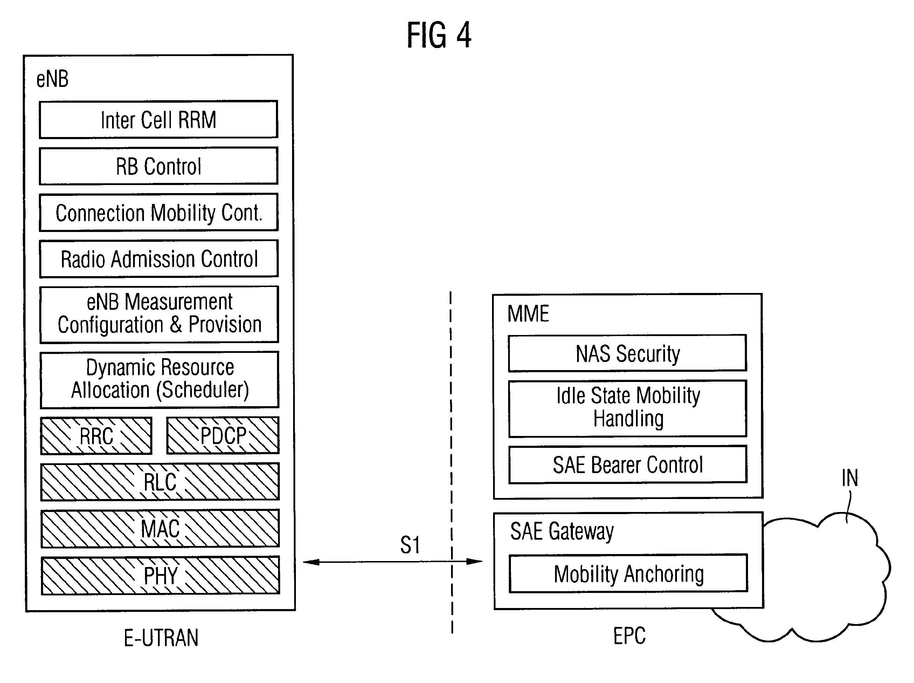

Fig. 4 shows a possible layer structure of such a GPP network. At the left-hand side the E-UTRAN network provided by the eNodeBs is shown as a stack of layers, and on the right-hand side the evolved packet core EPC, which is essentially based on an IP protocol is shown. The communication between the eNodeBs eNB and the mobility management unit MME or the SAE gateway is accomplished through the S1 interface indicated by the arrow.

First, the physical layer PHY for the evolved universal terrestrial radio access network E-UTRAN handling a transfer through radio waves using, for example a time division multiplex method, is shown. The physical layer PHY refers to the up and down links and it's control.

Layer 2 is split into sublayers of the medium access control MAC, the radio link control RLC, the radio resource control RRC and the packet data conversion protocol PDCP. The MAC sublayer provides for mapping between logical channels and transport channels, multiplexing and demultiplexing, traffic volume measurement, error correction, priority handling, etc. The RLC sublayer provides for example for transparent mode data transfer, error correction, segmentation and resegmentation, concatenation, reset, protocol error detection, and recovery etc.

Then, the PDCP sublayer provides for a header compression and decompression, transfer of user data, reordering of down links, ciphering of user plane data and control plane data and so forth. In parallel, on the same sublayer the RRC may broadcast system information related to the access stratum and non-access stratum, paging, maintenance and release of an RRC connection between the user equipment UE and the E-UTRAN, allocation of temporary identifiers between those, and security functions. The mobility functions of the RRC include the UE measurement reporting and control for reporting for inter-cell and inter-radio access technology mobility, i. e. handovers between different network architectures, the inter-cell handover, the user equipment cell selection and reselection, the control of the cell selection and reselection and the context transfer between eNodeBs in such handovers.

At the PDCP, RLC, and MAC level, the user equipment can transmit and/or receive data from the network. Further, the user equipment can also report channel quality information and feedback information to the relevant eNodeB. Hence, the functional entities of the eNodeBs are the inter-cell radio resource management, the radio bearer control, the connection mobility control, the radio admission control, the configuration and provision of the eNodeB's measurements and the dynamic resource allocation.

From this functional split between the EPC core network and tzhe E-UTRAN it is clear that the aggregation of handover data, and in particular of handover failure data, is advantageously done according to the method as depicted with regard to the foregoing figures.

On the right-hand side the involved packet core in terms of the mobility management entity and the SAE gateway form functions as to the NAS security (none access stratum security), the idle state mobility handling, i. e. a user equipment or cell phone is an idle mode, i. e. there is no data session ongoing, and the SAE bearer control. The SAE gateway further prosecutes the mobility anchoring. The EPC is basically organised in terms of the internet protocol, which is also coupled to the SAE gateway indicated by IN.

In order to handover these equipment contexts or data from one eNodeB to another in a handover situation a new eNodeB, i. e. either a target eNodeB if the handover procedure functions properly or the fallback eNodeB in case of a handover failure directly contacts the source eNodeB, for example through the X2 interface. The new eNodeB can also consult the MME to obtain the identity of the old eNodeB or source ENodeB for obtaining the user equipment context or data. Alternatively, the new eNodeB can contact the MME for obtaining the user equipment context.

In a handover from a first eNodeB to a second eNodeB within the E-UTRAN a variety of information or data is used. Such data can be added to the handover failure data for facilitating later analysis and for allocating the reasons while handover failures occur in the network. Consequentially, either of the following information or data can be cast to the handover failure data sets. Essentially, a user equipment or cell phone performs neighbour cell measurements based on measurement control and based on neighbour cell information from the network. I. e. a list a carrier frequencies of inter-frequency neighbours is signalled to the user equipment. The network also signals the reporting type criteria for event triggered or periodical reporting of the user equipment. A handover preparation is signalled in the E-UTRAN. In this case part of the handover commands originate from the target eNodeB and are transparently forwarded to the user equipment by the source eNodeB to which the user equipment is currently communicatively coupled before the handover. The user equipment may have certain quality of service profiles in use which are also sent to the target eNodeB by the source eNodeB through the X2 horizontal interface. Both, the source eNodeB and the user equipment keep context in order to enable a return of the user equipment to the source eNodeB or to any other eNodeB in case of a handover failure.

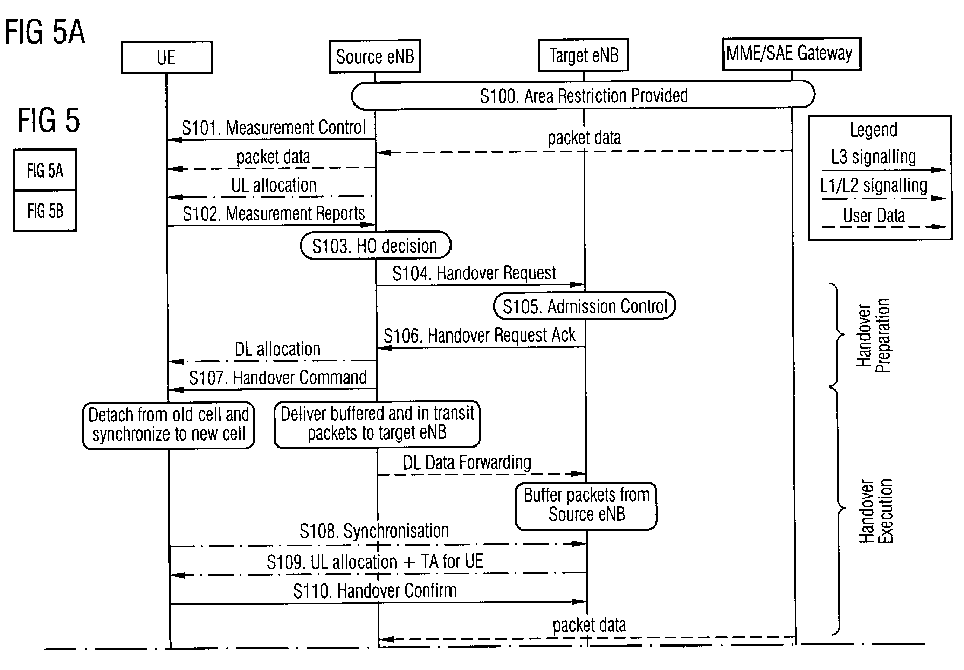

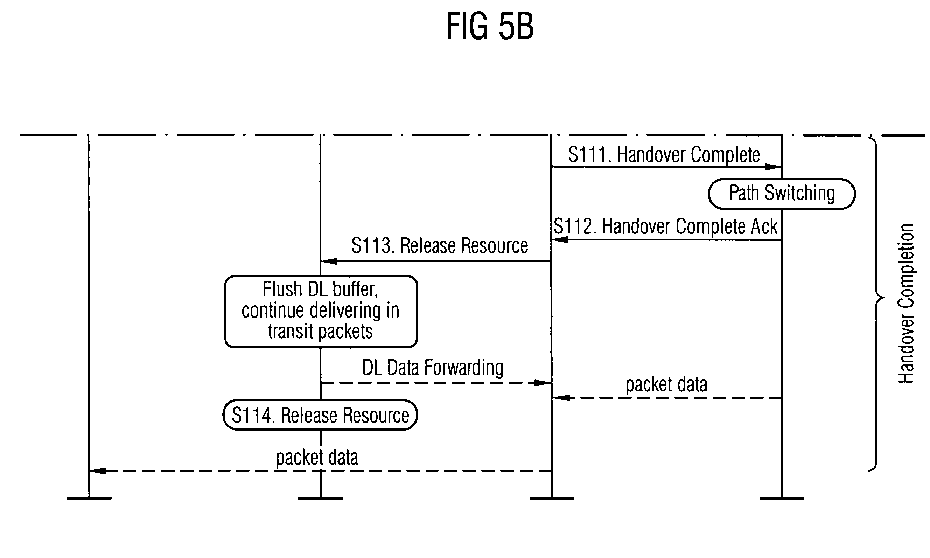

In fig. 5 a possible handover scenario of a user equipment UE from a source eNodeB (eNB) to a target eNodeB (eNB) and the involvement of the MME/SAI gateway is illustrated.

In fig. 5 signalling based on layer 1 or layer 2 is indicated by the dashed-dotted arrows, layer 3 signalling by the solid arrows and the transfer of user data by the dashed arrow.

In a first step S100 the user equipment has context within the source eNB containing information regarding to roaming restrictions. For instance, a user equipment may be forbidden to couple two certain eNBs though it is technically possible. This may be because certain eNBs belong to different service providers.

In Step 101 the source eNB configures the user equipment measurement procedures according to the area restriction information provided in step S100. After transferring packet data and performing an uplink allocation the user equipment is triggered to send a measurement report according to rules set by the system or specification in step 102. In the following step the source eNB decides (step S103) in dependence of the measurement report and additional RRM radio resource management information to handover the user equipment.

Then, in step S104 a handover request is issued by the source eNB to the target eNB. The request comprises also necessary information to prepare the handover at the target eNB. Necessary information may comprise a user equipment X2 signal context reference at the source eNB, the user equipment S1 evolve packet core signalling context reference, a target cell identification, the RRC context and the SAE bear context. The user equipment X2 and user equipment S1 UE X2/UE S1 signal references enable the target eNB to address the source eNB and the evolved packet core. The SAI bearer context includes necessary RNL (radio network layer) and TNL (transport network layer) addressing information. Also the quality of service profiles of the SAE bearers are forwarded.

In step 105 in dependence of the received information the target eNB can evaluate the likelihood of a successful handover, for example, because the resources can be granted to the target eNB, and the handover is admitted. According to the received SAE bearer quality of service information, the required resources can be arranged.

In step 106 the target eNB prepares the handover through the L1/L2 layer and sends a handover request acknowledge to the source eNB. Such a handover request acknowledge message can include a transparent container to be sent or forwarded to the user equipment as part of the handover command. This container can comprise parameters, for example access parameters for the user equipment.

Consequentially, a down link allocation is performed and in step S107 a handover command by an RRC message is generated by the source eNB and sent to the user equipment. This handover command can include the transparent container received from the target eNB. The source eNB performs necessary integrity protection and ciphering of this message and the user equipment receives the handover command with the necessary parameters, and therefore is commanded by the source eNB to perform the handover. Consequentially, the user equipment is detached from the old cell and synchronised with the new cell. The source eNB has to deliver buffered packets and packets in transit to the target eNB. The down link data forwarded to the target eNB that buffers those data packets received from the source eNB.

In step 108 after an expiry of the handover command the user equipment performs synchronisation to the target eNB and starts acquiring an up-link allocation. The network responds with an uplink allocation and a timing advance in step 109.

When the user equipment has successfully accessed the target cell or the target eNB in step 110 the user equipment sends handover confirm message to the target eNB to indicate that the handover procedure is completed for the user equipment. If for some reasons the target eNB is not reached and another fallback eNB takes the place of the target eNB a handover failure occurred. Consequentially, handover failure data, i. e. any data involved in a handover procedure may be stored at a location in the network. Those locations can be, as mentioned above, for example the target eNB, the source eNB or the fallback eNB. Alternatively, through the S1 interface handover failure data can also be aggregated at some place in the network, for example at the MME.

In conclusion of the handover procedure the evolved packet core is informed in step 111 that the handover is completed and the user equipment has changed the cell. In next step S112 the evolved packet core or MME confirms the completion of the handover by an acknowledgement. In step S113 the target eNB informs the source eNB of a successful handover such that the resources bound at the source eNB are released. Finally this is indicated in step S114.

In summary, the invention provides for a method for recording handover failures in cellular communication networks. By aggregating handover failure data at certain locations in the network the service provider is enabled to analyse such data and adapt or change the network architecture accordingly to avoid such handover failures.

Although the invention is illustrated with respect to certain examples it may be modified and extended. For example, the UMTS network mentioned in the description can be replaced by other wireless networks having a cellular structure, for example WiMax or WLAN networks. Apart from cell phones as user equipment any other device being able to communicatively couple with base stations can be employed.

### List of reference symbols

- S1: communication interface
- X1: communication interface
- S11-S114: methods steps
- IN: internet
- EPC: evolved packet call
- ENB: evolved node B
- C1, C2, C3: Cell
- eNB1, eNB2, eNB3: base station
- CP1, CP2, CP3: communicative coupling
- UE: user equipment
- MV: movement
- CN: communications network
- GW1, GW2: gateway
- PHY: physical layer
- MAC: medium access control
- RLC: radio link control
- RRC: radio resource control
- PDCP: packet data convergence protocol
- NAS: non-access stratum
- SAE: system architecture evolution
- EPC: evolved package core
- E-UTRAN: evolved universal terrestrial radio access network
- IN: internet

## Claims

1. Method for recording handover failures in a cellular communications network (CN) comprising a plurality of base stations (eNB1, eNB2, eNB3) and mobile user equipment (UE), said mobile user equipment (UE) being communicatively coupled to at least one of said base stations (eNB1, eNB2, eNB3), wherein identification data of base stations (eNB1, eNB2, eNB3) involved in a handover procedure from one base station (eNB1) to another base station (eNB2) is stored as handover failure data in said mobile user equipment (UE) for later analysis if a handover failure occurs.

2. Method of claim 1, comprising:
- monitoring (S11) whether a handover procedure from a source base station (eNB1) to a predetermined target base station (eNB2) is initiated;
- verifying (S21) if the mobile user equipment (UE) is communicatively coupled to the predetermined target base station (eNB2) after completion of said handover procedure;
- if after completion of the handover procedure the mobile user equipment (UE) is communicatively coupled to a fallback base station (eNB3) different from the target base station (eNB2), storing (S31) identification data of the source base station (eNB1), the predetermined target base station (eNB2) and the fallback base station (eNB3) as handover failure data; and
- transferring (S41) the handover failure data to a storage means at a predetermined position in the communications network (CN).

3. Method of any of the claims 1 or 2, wherein the handover failure data is transferred and stored at the resultant base station (eNB3) to which the mobile user equipment (UE) is communicatively coupled as a result of the handover procedure.

4. Method of any of the claims 1 - 3, wherein the handover failure data is transferred from the fallback base station (eNB3) to the source base station (eNB1) or to the target base station (eNB2) through a horizontal communication interface (X2) between neighbouring base stations (eNB1, eNB2, eNB3) in the communications network (CN).

5. Method of any of the claims 1 - 4, wherein at each base station (eNB1, eNB2, eNB3) in the communications network (CN) handover failure data is aggregated corresponding to handover failure events in which a respective base station (eNB1, eNB2, eNB3) is used as fallback base station (eNB3).

6. Method of any of the claims 1 - 5, wherein at each base station (eNB1, eNB2, eNB3) in the communications network (CN) handover failure data is aggregated corresponding to handover failure events in which a base station (eNB1, eNB2, eNB3) is used as source base station (eNB1).

7. Method of any of the claims 1 - 6, wherein at each base station (eNB1, eNB2, eNB3) in the communications network (CN) handover failure data is aggregated corresponding to handover failure events in which a base station (eNB1, eNB2, eNB3) is used as target base station (eNB3).

8. Method of any of the claims 1 - 7, wherein the handover failure data corresponding to a respective mobile user equipment (UE) is aggregated at the respective mobile user equipment (UE).

9. Method of any of the claims 1 - 8, wherein the handover failure data is transferred (S1) to a mobile management entity host (MME) in the communications network (CN).

10. Method of any of the claims 4 - 10, wherein the handover failure data is aggregated over a predetermined time period.

11. Method of any of the claims 1 - 10, wherein the handover failure data further comprises an identifier for a core network context (CNC) or a core network context (CNC) referring to the handover.

12. Method of any of the claims 1 - 11, wherein the handover failure data further comprises identification data of the mobile user equipment (UE).

13. Method of any of the claims 2 - 12, wherein a handover procedure comprises:
- measuring the quality of a communicative coupling between the mobile user equipment (UE) and the source base station (eNB1) ;
- sending a handover request from the mobile user equipment (UE) to the source base station (eNB1);
- forwarding the handover request from the source base station (eNB1) to a target base station (eNB2); and
- decoupling of the mobile user equipment (UE) from the source base station (eNB1) and coupling to another base station (eNB2, eNB3) as the target base station.

14. Method of any of the claims 1 - 13, wherein the handover failure data is stored in the form of a performance management counter.

15. Method of any of the claims 1 - 14, wherein the handover failure data is stored in an XML data format as performance management counter.

16. Method of any of the claims 4 - 15, wherein the aggregated handover failure data is analysed for determining prevalent handover failure causes.

17. Communications network (CN) comprising a plurality of base stations (eNB1, eNB2, eNB3) and mobile user equipment (UE), wherein said base stations (eNB1, eNB2, eNB3) and said mobile user equipment (UE) are adapted to execute a method according to any one of the claims 1 - 16.

18. Communications network (CN) of claim 17, wherein the communications network (CN) is a UMTS network.

19. Communications network (CN) of claim 17 or 18, wherein the mobile user equipment (UE) is a mobile telephone.

20. Communications network (CN) of any of the claims 17 - 19, wherein the communications network (CN) does not comprise a controller device for controlling a subset of the plurality of base stations (eNB1, eNB2, eNB3) in the communications network (CN) for initiating or controlling a handover.

21. Communications network (CN) of any of the claims 17 - 20, wherein a handover procedure is exclusively executed by neighbouring base stations (eNB1, eNB2, eNB3).

22. Communications network (CN) of any of the claims 17 - 21, wherein a horizontal interface (X2) for communicatively coupling neighbouring base stations (eNB1, eNB2, eNB3) with one another is provided.

23. Communications network (CN) of any of the claims 17 - 22, wherein mobile user equipment context (UEC) is exclusively accessible at the base station (eNB1, eNB2, eNB3) to which the mobile user equipment (UE) is actually communicatively coupled.

24. Communications network (CN) of any of the claims 17 - 23, wherein storing and/or aggregating handover failure data at the mobile user equipment (UE) and transferring the handover failure data is implemented as a software application on the mobile user equipment (UE).

25. Communications network (CN) of any of the claims 17 - 24, wherein each base station (eNB1, eNB2, eNB3) comprises a storage means for storing handover failure data sets corresponding to handover failure events in which the respective base station (eNB1, eNB2, eNB3) is a fallback base station.
